(19) Europäisches Patentamt
European Patent Office
Office européen des brevets

(11) EP 3 702 174 B1

(12) **EUROPEAN PATENT SPECIFICATION**

(45) Date of publication and mention of the grant of the patent:
**17.05.2023 Bulletin 2023/20**

(21) Application number: **18869584.5**

(22) Date of filing: **17.10.2018**

(51) International Patent Classification (IPC):
***B29D 30/38*** (2006.01) ***B60C 5/01*** (2006.01)
***B60C 1/00*** (2006.01) ***B60C 5/00*** (2006.01)
***B60C 9/22*** (2006.01)

(52) Cooperative Patent Classification (CPC):
**B60C 5/007; B29D 30/38; B60C 1/0041; B60C 5/01; B60C 9/2204;** B29D 2030/381

(86) International application number:
**PCT/JP2018/038693**

(87) International publication number:
**WO 2019/082767 (02.05.2019 Gazette 2019/18)**

(54) **METAL RESIN COMPOSITE MEMBER FOR TIRES, AND TIRE**

METALL-HARZ-VERBUNDSTOFFELEMENT FÜR REIFEN SOWIE REIFEN

ÉLÉMENT COMPOSITE DE RÉSINE MÉTALLIQUE POUR PNEUS, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2017 JP 2017206137**

(43) Date of publication of application:
**02.09.2020 Bulletin 2020/36**

(73) Proprietor: **Bridgestone Corporation**
**Tokyo 104-8340 (JP)**

(72) Inventors:
- **ANZAI, Hiroyuki**
  **Tokyo 104-8340 (JP)**
- **SUZUKI, Takahiro**
  **Tokyo 104-8340 (JP)**
- **NAKAKITA, Yukinori**
  **Tokyo 104-8340 (JP)**
- **YAMADA, Takumi**
  **Tokyo 104-8340 (JP)**
- **FUDEMOTO, Hiroyuki**
  **Tokyo 104-8340 (JP)**

(74) Representative: **Marks & Clerk LLP**
**15 Fetter Lane**
**London EC4A 1BW (GB)**

(56) References cited:
**EP-A1- 2 676 809**
**EP-B1- 2 676 809**
**WO-A1-2016/047707**
**WO-A1-2016/052706**
**WO-A1-2017/104188**
**JP-A- 2012 046 025**
**JP-A- 2012 046 034**
**JP-A- 2012 046 034**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 702 174 B1

## Description

Technical Field

The present invention relates to a metal resin composite member for tires, and a tire.

Background Art

In recent years, tires that include a tire main body (hereinafter, also referred to as a "tire frame") formed using a resin material in place of a conventional material such as a rubber, have been developed because of their lightweightedness, ease of molding, recyclability, and the like. For example, Japanese Patent Application Laid-Open (JP-A) No. 2012-46030 proposes a tire that includes a tire frame formed using a polyamide thermoplastic resin as a resin material, and JP-ANo. 2012-46025 proposes a tire that includes a tire frame formed using a polyester thermoplastic resin as a resin material.

JP-A Nos. 2012-46030 and 2012-46025 describe heat-melting a portion of a metal cord (reinforcing member) coated with a thermoplastic resin of the same kind as the thermoplastic resin configuring the tire frame, to thereby bond the metal cord to the tire frame. By using the same kind of thermoplastic resins for the reinforcing member and the tire frame, favorable bondability is realized between the tire frame and the reinforcing cord. Reference is also made to EP 2676809 A1 and JP-A No.2012-46034.

Summary of Invention

Technical Problem

From the standpoint of the cornering power (steering response) of a tire, it is effective to make the coating of the reinforcing member have a higher rigidity than the tire frame. However, when a resin material having a higher rigidity than the resin material of the tire frame is used for coating the reinforcing member, low-temperature impact resistance may deteriorate.

Therefore, the provision of a metal resin composite member for tires, which has excellent low-temperature impact resistance and can improve the cornering power of a tire, and a tire including this metal resin composite member for tires, is desired.

Solution to Problem

A metal resin composite member for a tire, comprising a metal cord and a resin layer, the resin layer being formed of a resin mixture that includes a thermoplastic resin A, which has a hard segment and a soft segment, and a thermoplastic resin B, which is formed of the same structural units as the hard segment of thermoplastic resin A, and a ratio of the hard segment in the resin mixture being from 60% by mass to less than 75% by mass, wherein the same structural units refers to a case in which thermoplastic resin B consists only of the same structural units as the hard segment of thermoplastic resin A, or a case in which thermoplastic resin B includes the same structural units as the hard segment of thermoplastic resin A in an amount of 80% by mass or more, of the total structural units, characterized in that the thermoplastic resin A is a polyester thermoplastic elastomer (TPC) and the thermoplastic resin B is a polybutylene terephthalate (PBT).

Effect of the invention

According to the invention, a metal resin composite member for a tire, which has excellent low-temperature impact resistance and can improve the cornering power of a tire, and a tire including this metal resin composite member for tires are provided.

BRIEF DESCRIPTION OF DRAWINGS

FIG. 1A is a perspective view illustrating a cross-section of a part of a tire according to one embodiment of the present invention;
FIG. 1B is a cross-sectional view of a bead portion attached to a rim;
FIG. 2 is a cross-sectional view taken along a tire rotation axis, which illustrates a state where a reinforcing cord is

embedded in a crown portion of a tire case of the tire according to the present embodiment; and

FIG. 3 is a drawing for explaining operations of embedding the reinforcing cord in the crown portion of the tire case.

DESCRIPTION OF EMBODIMENTS

Mode for Carrying Out the Invention

Specific embodiments of the invention are described below in detail; however, the invention is not restricted to the below-described embodiments by any means, and the invention can be carried out with modifications as appropriate within the scope of the invention according to the appended claims.

The term "resin" used herein is a concept that encompasses thermoplastic resins (including thermoplastic elastomers) and thermosetting resins, but not vulcanized rubbers.

The term "thermoplastic elastomer" used herein refers to a copolymer having a hard segment and a soft segment. For example, a copolymer having a polymer that constitutes a hard segment that is crystalline and having a high melting point or a high cohesive strength; and a polymer that constitutes a soft segment that is amorphous and having a low glass transition temperature. The thermoplastic elastomer has a property to become softened and fluidized as the temperature is increased, but becomes relatively hard and strong when cooled, and exhibits rubber-like elasticity.

In the specification, the hard segment refers to a component that is relatively harder than the soft segment, and the soft segment refers to a component that is relatively softer than the hard segment. The hard segment is preferably a molecular-constraint component that functions as a crosslinkage point of a crosslinked rubber and suppresses plastic deformation. Examples of the hard segment include a segment such as a structure having a rigid group such as an aromatic group or an alicyclic group in the main backbone; and a structure that enables intermolecular packing by means of hydrogen bond or $\pi$-$\pi$ interaction. The soft segment is preferably a flexible component that exhibits rubber-like elasticity, and examples thereof include a segment of a structure that has a long-chain group (such as a long-chain alkylene group) in the main chain with a high degree of freedom of molecular rotation elasticity.

In the present specification, the numerical ranges described as "from ... to ..." includes the lower limit value and the upper limit value, respectively.

The term "step" used herein encompasses not only an independent step but also a step that cannot be clearly distinguished from other steps, as long as the intended purpose of the step is achieved.

<Metal resin composite member for tire>

The metal resin composite member for a tire of the invention (hereinafter, also referred to as a metal resin composite) includes a metal cord and a resin layer, the resin layer being formed of a resin mixture that includes a thermoplastic resin A, which has a hard segment and a soft segment, and a thermoplastic resin B, which is formed of the same structural units as the hard segment of thermoplastic resin A, and a ratio of the hard segment (hereinafter, also referred to as a HS ratio) in the resin mixture being from 60% by mass to less than 75% by mass.

The research made by the inventors has proved that a metal resin composite member, having a resin layer that is formed of a resin mixture having a HS ratio of from 60% by mass to less than 75% by mass, exhibits an excellent effect of improving the cornering power of a tire while maintaining favorable low-temperature impact resistance, as compared with a metal resin composite member having a resin layer formed of a resin mixture that does not satisfy the condition of HS ratio. The reason for this is considered to be that the rigidity of the resin layer is increased by regulating the HS ratio to be at least 60% by mass, thereby improving the cornering power, while avoiding becoming too rigid by regulating the HS ratio to be less than 75% by mass, thereby maintaining favorable low-temperature impact resistance.

Further, the inventors have found that favorable low-temperature impact resistance is maintained when the HS ratio is regulated to be from 60% by mas to less than 75% by mass by blending thermoplastic resin B with thermoplastic resin A, as compared with a case of simply modifying the HS ratio of thermoplastic resin A. The reason for this is not exactly clear, but it is considered to be that a sea-island structure is formed in the resin mixture by thermoplastic resin A and thermoplastic resin B that are in a mutually immiscible state.

Further, by regulating the HS ratio of the resin mixture to be at least 60% by mass, it may be possible to achieve an effect of improving the resistance against moisture and heat by increasing the barrier properties of a metal cord that is to be covered with the resin mixture; and also an effect of anti-plunger properties.

The metal resin composite member may be disposed at the outer periphery (crown portion) of a tire frame. The method of disposing the metal resin composite member at the outer periphery of a tire frame is not particularly limited. For example, the metal resin composite member may be wound around the outer periphery of a tire frame by a method as described in the Examples. It is preferred to melt the resin layer of the metal resin composite member and the crown portion of the tire frame by heating, in order to improve the bond strength thereof.

The metal resin composite member may be formed only of a metal cord and a resin layer, or may include a

member other than the metal cord and the resin layer. For example, the metal resin composite member may have an adhesive layer between the metal cord and the resin layer.

The shape of the section of the metal resin composite member is not particularly limited, and examples thereof include a circular shape and a square shape. For ease of disposing the metal resin composite member on the crown portion of the tire frame, a square shape is preferred. The meal resin composite member may include a single metal cord, or may include plural (for example, two) metal cords.

The details of the metal resin composite member are described below, but the invention is not restricted thereto.

[Metal Cord]

The metal cord is not particularly restricted, and any metal cord that are generally used for the purpose of reinforcing a tire may be employed. Examples of the metal cord include a monofilament composed of a single metal cord (single strand), and a multifilament that is formed from twisted plural metal cords (twisted strand). The cross-sectional shape, the diameter and the like of the metal cord are not particularly restricted, and may be selected in accordance with the intended use and the like of the composite member. The material of the metal cord is not particularly restricted, and may be steel and the like.

When the metal cord is a twisted strand of plural cords, the number of the cords is not particularly restricted. For example, the number of the cords may be from 2 to 10, preferably from 5 to 9.

From the standpoint of reinforcing a tire while reducing the weight thereof, the diameter of the metal cord is preferably from 0.2 mm to 2 mm, more preferably from 0.8 mm to 1.6 mm.

When the metal cord is a single cord, the diameter thereof is defined as a measured value of a diameter at a cross-section of the metal cord (the maximum value of a distance between the arbitrarily-selected two points on the outline of a cross-section of the metal cord). In a case in which the metal cord consists of plural cords, the diameter thereof is defined as a diameter of a circle that is smallest among the circles that include all of the cross-sections of the plural cords observed therein.

The tensile elastic modulus (hereinafter, unless otherwise specified, the term "elastic modulus" used herein refers to a tensile elastic modulus) of the metal cord is usually approximately from 100,000 MPa to 300,000 MPa, preferably from 120,000 MPa to 270,000 MPa, more preferably from 150,000 MPa to 250,000 MPa. The tensile elastic modulus of the metal cord is calculated from the slope of a stress-strain curve that is obtained using a tensile tester with a ZWICK-type chuck.

The elongation at break (tensile elongation at break) of the metal cord is usually approximately from 0.1% to 15%, preferably from 1% to 15%, more preferably from 1% to 10%. The tensile elongation at break of the metal cord can be determined from the strain based on a stress-strain curve that is obtained using a tensile tester with a ZWICK-type chuck.

[Resin Layer]

The resin layer is formed from a resin mixture that includes thermoplastic resin A, having a hard segment and a soft segment, and thermoplastic resin B, having the same structural units as the hard segment of thermoplastic resin A, and has a HS ratio of from 60% by mass to less than 75% by mass.

In the specification, the "HS ratio of the resin mixture" refers to a ratio of hard segment (HS) to the total of hard segment (HS) and soft segment (SS) in the resin mixture, and is calculated by the following formula.

The "hard segment (HS) in the resin mixture" refers to the total of the hard segment in thermoplastic resin A and the structural unit of thermoplastic resin B that is the same kind as the hard segment of thermoplastic resin A.

$$\text{HS ratio (\% by mass)} = \{HS/(HS+SS)\} \times 100$$

The HS ratio of the resin mixture can be measured by the following nuclear magnetic resonance (NMR) method as described below, for example.

A sample is prepared by diluting and dissolving the resin with HFIP-$d_2$ (1,1,1,3,3,3-hexafluoroisopropanol-$d_2$) as a solvent at 20 mg/2 g, and carrying out $^1$H-NMR measurement using AL400 (JEOL Ltd.) as an NMR analyzer.

The HS ratio of the resin mixture is not particularly limited as long as it is 60% by mass or more to less than 75% by mass, and may be from 63% by mass to 74.5% by mass, for example.

The method of confirming whether or not the resin mixture includes thermoplastic resin A and thermoplastic resin B is not particularly limited, and may be conducted by thermal analysis, observing a section of the resin mixture, and the like.

From the viewpoint of maintaining favorable low-temperature impact resistance, the resin mixture preferably

has a sea-island structure. Specifically, thermoplastic resin A and thermoplastic resin B preferably exist in the resin mixture in a mutually immiscible state.

In the specification, whether or not the resin mixture has a sea-island structure can be determined based on the size of a region that corresponds to the island (domain size). Specifically, for example, when there is a domain with a maximum diameter of 0.1 μm or more at a section of the resin mixture, when observed with an atomic force micrometer (AFN), it is determined that the resin mixture has a sea-island structure.

The sea-island structure of the resin mixture is preferably formed of a matrix that includes thermoplastic resin A and a domain that includes thermoplastic resin B. In that case, the resin mixture tends to exhibit favorable low-temperature impact resistance because of a structure in which thermoplastic resin B, being highly rigid, is dispersed in thermoplastic resin A, which exhibits elasticity.

The domain size of the sea-island structure of the resin mixture is preferably from 0.1 μm to 10 μm, more preferably from 0.1 μm to 5 μm, further preferably from 0.1 μm to 1 μm. In the specification, the domain size refers to the average value of the maximum diameter of the domains observed in the sea-island structure. The average value of the maximum diameter of the domains is an arithmetic average value of the maximum diameter of 100 domains that are arbitrarily selected at a section of the resin mixture observed with an AFM.

From the viewpoint of maintaining favorable low-temperature impact resistance, the resin mixture preferably has two or more peaks in a Tan δ curve obtained by viscoelasticity measurement. When the Tan δ curve obtained by viscoelasticity measurement has two or more peaks, it is determined that two or more components exist in the resin mixture in a mutually immiscible state (i.e., a sea-island structure is formed).

The Tan δ curve preferably has a peak derived from thermoplastic resin A and a peak derived from thermoplastic peak B. When the Tan δ curve obtained by viscoelasticity measurement has a peak derived from thermoplastic resin A and a peak derived from thermoplastic peak B, it is determined that thermoplastic resin A and thermoplastic B exist in the resin mixture in a mutually immiscible state (i.e., a sea-island structure is formed).

The Tan δ curve preferably has a peak derived from thermoplastic resin A at a lower temperature side and a peak derived from thermoplastic resin B at a higher temperature side. Further, the Tan δ curve preferably has a peak derived from thermoplastic resin A at a temperature range of -10°C or lower. When the peak derived from thermoplastic resin A exists at a temperature range of -10°C or lower, thermoplastic resin A is not too rigid and favorable low-temperature impact resistance tends to be maintained. The lower limit of the temperature range in which the peak derived from thermoplastic resin A exists is not particularly limited, but the peak derived from thermoplastic resin A preferably exists at a temperature range of -60°C or higher.

The temperature range at which the peak derived from thermoplastic resin B is not particularly limited, but is preferably from 45°C to 150°C.

In the specification, the Tan δ curve is obtained by, for example, conducting viscoelasticity measurement using a sample of 6 mm in width, 38 mm in length and 2 mm in thickness, with a viscoelastometer (ARES-G2, TA Instruments) at torsion mode (from -100°C to 150°C, at a torsion of 0.28% and 35Hz) with a measurement gap of 20 mm.

The resin mixture may include a resin other than thermoplastic resin A and thermoplastic resin B. In that case, the total of thermoplastic resin A and thermoplastic resin B in the total resin is preferably 70% by mass or more, more preferably 80% by mass or more, further preferably 90% by mass or more.

The melting point of the resin mixture is usually approximately from 100°C to 350°C. From the viewpoint of durability and productivity of a tire, the melting point is preferably from 100°C to 250°C, more preferably from 120°C to 250°C.

The resin mixture may include a component other than a resin. Examples of the component include various fillers (e.g., silica, calcium carbonate and clay), age resistors, oils, plasticizers, color formers, and weather resistant agents. When the resin mixture includes a component other than the resin, the total content ratio thereof is preferably not greater than 10% by mass, more preferably not greater than 5% by mass, with respect to the total mass of the resin mixture.

In the metal resin composite member, the thickness of the resin layer is not particularly limited. For example, the resin layer preferably has a minimum thickness (thickness at a portion with the smallest thickness) of from 50 μm to 600 μm.

(Thermoplastic resin A)

Thermoplastic resin A is not particularly limited, as long as it has a structural unit that corresponds to a hard segment and a structural unit that corresponds to a soft segment in the molecule and is a polyester thermoplastic elastomer. In the specification, the polyester thermoplastic elastomer refers to a thermoplastic elastomer in which the hard segment is a structural unit having an ester bond in the main chain thereof, and the same applies to other kinds of thermoplastic elastomers. The resin mixture may include a single kind of thermoplastic resin A, or may include two or more kinds thereof.

From the viewpoint of achieving both of favorable low-temperature impact resistance and favorable cornering power, thermoplastic resin A is a polyester thermoplastic elastomer (TPC).

Thermoplastic resin A is a polyester thermoplastic elastomer and examples thereof include a polyester thermoplastic elastomer having a hard segment that is at least one selected from the group consisting of polybutylene terephthalate (PBT), polyethylene terephthalate (PET), polybutylene naphthalate (PBN) and polyethylene naphthalate (PEN). In that case, the soft segment is not particularly limited, and examples thereof include an aliphatic polyether such as polytetramethyelne glycol (PTMG) and an aliphatic polyester.

The definition and classification of the thermoplastic elastomers may be based on JIS K 6418:2007. Specific examples of the thermoplastic elastomer that may be used as thermoplastic resin A are described below.

(1) Polyester Thermoplastic Elastomer

The polyester thermoplastic elastomer is, for example, a polymer compound in which at least a polyester forms a hard segment that is crystalline and has a high melting point, and a soft segment that is amorphous and has a low glass transition temperature is formed from a different polymer (for example, polyester or polyether).

Examples of a polyester that forms a hard segment of a polyester thermoplastic elastomer include an aromatic polyester. The aromatic polyester can be formed from, for example, an aromatic dicarboxylic acid or an ester-forming derivative thereof, and an aliphatic diol. The aromatic polyester is preferably polybutylene terephthalate, which is derived from terephthalic acid and/or dimethyl terephthalate and 1,4-butanediol; and may be a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof) and a diol having a molecular weight of 300 or less, such as an aliphatic diol (e.g., ethylene glycol, trimethylene glycol, pentamethylene glycol, hexamethylene glycol, neopentyl glycol, or decamethylene glycol), an alicyclic diol (e.g., 1,4-cyclohexane dimethanol or tricyclodecane dimethylol) or an aromatic diol (e.g., xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1 -bis[4-(2-hydroxyethoxy)phenyl]cyclohexane, 4,4'-dihydroxy-*p*-terphenyl, or 4,4'-dihydroxy-*p*-quaterphenyl), or may be a copolymerized polyester in which two or more kinds of these dicarboxylic acid components and diol components are used in combination. Further, for example, a polyfunctional carboxylic acid component, a polyfunctional oxyacid component or a polyfunctional hydroxy component, which has three or more functional groups, can be copolymerized at an amount of 5% by mole or less.

Specific examples of the polyester that forms a hard segment include polyethylene terephthalate, polybutylene terephthalate, polymethylene terephthalate, polyethylene naphthalate and polybutylene naphthalate, among which polybutylene terephthalate is preferred.

Examples of a polymer that forms a soft segment include an aliphatic polyester and an aliphatic polyether.

Examples of the aliphatic polyether include poly(ethylene oxide) glycol, polypropylene oxide) glycol, poly(tetramethylene oxide) glycol, poly(hexamethylene oxide) glycol, copolymers of ethylene oxide and propylene oxide, ethylene oxide-addition polymers of polypropylene oxide) glycol, and copolymers of ethylene oxide and tetrahydrofuran.

Examples of the aliphatic polyester include poly($\varepsilon$-caprolactone), polyenantholactone, polycaprylolactone, polybutylene adipate, and polyethylene adipate.

Among these aliphatic polyethers and aliphatic polyesters, from the standpoint of elastic properties of the resulting polyester block copolymer, poly(tetramethylene oxide) glycol, an ethylene oxide-adduct of polypropylene oxide) glycol, poly($\varepsilon$-caprolactone), polybutylene adipate and polyethylene adipate are preferred as the polymer that forms a soft segment.

From the standpoints of toughness and flexibility at low temperature, the number-average molecular weight of the polymer that forms a soft segment is preferably from 300 to 6,000. Further, from the standpoint of moldability, the mass ratio (x:y) of the hard segment (x) and the soft segment (y) is preferably from 99:1 to 20:80, more preferably from 98:2 to 30:70.

Examples of the combination of the hard segment and the soft segment as mentioned above include each of the exemplary combination of the hard segment and the soft segment as mentioned above. Among the exemplary combinations, a combination of polybutylene terephthalate as a hard segment and an aliphatic polyether as a soft segment is preferred, and a combination of polybutylene terephthalate as a hard segment and poly(ethylene oxide)glycol as a soft segment is more preferred.

Examples of the commercially available products of a polyester thermoplastic elastomer include the HYTREL Series manufactured by DuPont-Toray Co., Ltd. (e.g., 3046, 5557, 6347, 4047 and 4767) and the PELPRENE Series manufactured by TOYOBO Co., Ltd. (e.g., P30B, P40B, P40H, P55B, P70B, P150B, P280B, P450B, P150M, S1001, S2001, S5001, S6001 and S9001).

The polyester thermoplastic elastomer can by synthesized by copolymerizing a polymer that forms a hard segment and a polymer that forms a soft segment by a known method.

(2) Polyamide thermoplastic elastomer

The polyamide thermoplastic elastomer refers to a thermoplastic resin material that is a copolymer formed of a polymer that forms a hard segment that is crystalline and has a high melting point and a polymer that forms a soft segment that is amorphous and has a low glass transition temperature, wherein the polymer that forms a hard segment includes an amide bond (-CONH-) in its main chain.

Examples of the polyamide thermoplastic elastomer include a material in which at least a polyamide forms a hard segment that is crystalline and has a high melting point, and a polymer other than the polyamide (such as polyester or polyether) forms a soft segment that is amorphous and has a low glass transition temperature.

The polyamide thermoplastic elastomer may be formed by using a chain elongating agent (such as a dicarboxylic acid) in addition to the hard segment and the soft segment.

Specific examples of the polyamide thermoplastic elastomer include the polyamide thermoplastic elastomer (TPA) as defined in JIS K6418:2007 and the polyamide elastomer described in JP-ANo. 2004-346273.

In the polyamide thermoplastic elastomer, examples of the polyamide that forms a hard segment include a polyamide formed from a monomer represented by the following Formula (1) or Formula (2).

$$H_2N\text{-}R^1\text{-}COOH \qquad (1)$$

In Formula (1), $R^1$ represents a hydrocarbon molecular chain having 2 to 20 carbon atoms (for example, an alkylene group having 2 to 20 carbon atoms).

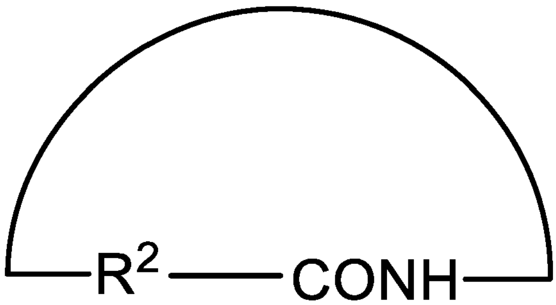

(2)

In Formula (2), $R^2$ represents a hydrocarbon molecular chain having 3 to 20 carbon atoms (for example, an alkylene group having 3 to 20 carbon atoms).

In Formula (1), $R^1$ is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

In Formula (2), $R^2$ is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

Examples of the monomer represented by Formula (1) or Formula (2) include a ω-aminocarboxylic acid and a lactam. Examples of the polyamide that forms a hard segment include a polycondensate of a ω-aminocarboxylic acid or a lactam, and a polycondensate of a diamine and a dicarboxylic acid.

Examples of the ω-aminocarboxylic acid include aliphatic ω-aminocarboxylic acids having 5 to 20 carbon atoms, such as 6-aminocaproic acid, 7-aminoheptanoic acid, 8-aminooctanoic acid, 10-aminocapric acid, 11-aminoundecanoic acid and 12-aminododecanoic acid.

Examples of the lactam include aliphatic lactams having 5 to 20 carbon atoms, such as lauryllactam, ε-caprolactam, undecalactam, ω-enantholactam and 2-pyrrolidone.

Examples of the diamine include aliphatic diamines having 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-triemthylhexamethylenediamine, 2,4,4-trimethylhexamethylenediamine, 3-methylpentamethylenediamine and m-xylylenediamine.

The dicarboxylic acid may have a structure represented by HOOC-($R^3$)m-COOH ($R^3$ is a hydrocarbon molecular chain having 3 to 20 carbon atoms, and m is 0 or 1), and examples thereof include aliphatic dicarboxylic acids having 2 to 20 carbon atoms, such as oxalic acid, succinic acid, glutaric acid, adipic acid, pimelic acid, subric acid, azelaic acid,

sebacic acid and dodecanedioic acid.

As the polyamide that forms a hard segment, a polyamide obtained by ring-opening polycondensation of laurylIacram, ε-caprolactam or udecanelactam is preferred.

Examples of the polymer that forms a soft segment include polyester and polyether, and specific examples thereof include polyethyelne glycol, polypropylene glycol, polytetramethylene ether glycol, and ABA-type triblock polyether. These polymers may be used alone or in combination of two or more kinds. It is also possible to use a polyether diamine or the like, which is obtained by allowing ammonia or the like to react with a terminal end of a polyether.

The ABA-type triblock polyether refers to a polyether having a structure represented by the following Formula (3).

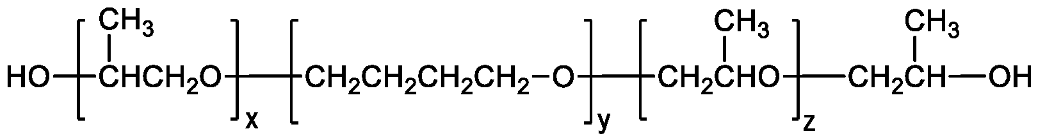

(3)

In Formula (3), each of x and z independently represents an integer of from 1 to 20, and y represents an integer of from 4 to 50.

In Formula (3), each of x and z is preferably independently an integer of from 1 to 18, more preferably an integer of from 1 to 16, further preferably an integer of from 1 to 14, yet further preferably an integer of from 1 to 12. In Formula (3), y is preferably an integer of from 5 to 45, more preferably an integer of from 6 to 40, further preferably an integer of from 7 to 35, yet further preferably an integer of from 8 to 30.

Examples of the combination of a hard segment and a soft segment include combinations of these selected from the hard segments and the soft segments as described above. Among the combinations, a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and ABA-type triblock polyether are preferred. Among these combinations, a combination of a ring-opening polycondensate of lauryl lactam and ABA-type triblock polyether is more preferred.

The number average molecular weight of the polymer that forms a hard segment (polyamide) is preferably from 300 to 15000, from the viewpoint of melt moldability. The number average molecular weight of the polymer that forms a soft segment is preferably from 200 to 6000 from the viewpoint of toughness and low-temperature flexibility. The mass ratio (x : y) of the hard segment (x) and the soft segment (y) is preferably from 50 : 50 to 90 : 10, more preferably from 50 : 50 to 80 : 20, from the viewpoint of moldability.

The polyamide thermoplastic elastomer can be synthesized by a known process of copolymerizing a polymer that forms a hard segment and a polymer that forms a soft segment.

Examples of the commercially available products of the polyamide thermoplastic elastomer include the UBESTA XPA series of Ube Industries, Ltd. (for example, XPA9063X1, XPA9055X1, XPA9048X2, XPA9048X1, XPA9040X1, XPA9040X2 and XPA9044) and the VESTAMID series of Daicel-Evonik Ltd. (for example, E40-S3, E47-S1, E47-S3, E55-S1, E55-S3, EX9200 and E50-R2).

(3) Polyolefin thermoplastic elastomer

Examples of the polyolefin thermoplastic elastomer include materials in which at least a polyolefin forms a hard segment that is crystal and has a high melting point and a polymer other than the polyolefin that forms a soft segment (for example, polyolefin, other polyolefin and a polyvinyl compound) forms a soft segment that is amorphous and has a low glass transition temperature. Examples of the polyolefin that forms a hard segment include polyethylene, polypropylene, isotactic polypropylene and polybutene.

Examples of the polyolefin thermoplastic elastomer include an olefin-α-olefin random copolymer and an olefin block copolymer.

Specific examples of the polyolefin thermoplastic elastomer include propylene block copolymer, ethylene-propylene copolymer, propylene-1-hexene copolymer, propylene-4-methyl-1-pentene copolymer, propylene-1-butene copolymer, ethylene-1-hexene copolymer, ethylene-4-methyl-pentene copolymer, ethylene-1-butene copolymer, 1-butene-1-hexene copolymer, 1-butene-4-methyl-pentene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene-methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer, ethylene-vinyl acetate copolymer and propylene-vinyl acetate copolymer.

Among these copolymers, the polyolefin thermoplastic elastomer is preferably at least one selected from the group consisting of propylene block copolymer, ethylene-propylene copolymer, propylene-1-hexene copolymer, propylene-4-methyl-1-pentene copolymer, propylene-1-butene copolymer, ethyelne-1-hexene copolymer, ethyelne-4-methylpentene copolymer, ethylene-1-butene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer and propylene-vinyl acetate copolymer; more preferably at least one selected from the group consisting of ethylene-propylene copolymer, propylene-1-butene copolymer, ethylene-1-butene copolymer, ethylene-methyl methacrylate copolymer, ethylene-methyl acrylate copolymer, ethylene-ethyl acrylate copolymer and ethylene-butyl acrylate copolymer.

It is possible to combine two or more kinds of polyolefin resins, such as ethylene and propylene. The content of the polyolefin resin in the polyolefin thermoplastic elastomer is preferably from 50% by mass to 100% by mass.

The number average molecular weight of the polyolefin thermoplastic elastomer is preferably from 5000 to 10000000. When the number average molecular weight of the polyolefin thermoplastic elastomer is from 5000 to 10000000, a resin material having sufficient mechanical properties and excellent processability can be obtained. From the same viewpoint, the number average molecular weight of the polyolefin thermoplastic elastomer is more preferably from 7000 to 1000000, further preferably from 10000 to 1000000. When the number average molecular weight is within this rage, mechanical properties and processability of the resin material can be further improved.

The number average molecular weight of the polymer that forms a soft segment is preferably from 200 to 6000, from the viewpoint of toughness and flexibility at low temperature. The mass ratio (x : y) of the hard segment (x) and the soft segment (y) is preferably from 50 : 50 to 95 : 5, more preferably from 50 : 50 to 90 : 10, from the viewpoint of moldability.

The polyolefin thermoplastic elastomer can be synthesized by a known process for copolymerization.

It is possible to use an acid-modified polyolefin thermoplastic elastomer as the polyolefin thermoplastic elastomer.

The acid-modified polyolefin thermoplastic elastomer refers to a polyolefin thermoplastic elastomer that is bonded with an unsaturated compound having an acidic group such as a carboxyl group, a sulfuric acid group or a phosphoric acid group.

Examples of the method of allowing an unsaturated compound having an acidic group to bond with a polyolefin thermoplastic elastomer include a method of allowing an unsaturated bonding site of an unsaturated carboxylic acid (generally maleic acid anhydride) to bond with a polyolefin thermoplastic elastomer.

The unsaturated compound having an acidic group is preferably an unsaturated compound having a carboxyl group that is relatively weak in acidity, from the viewpoint of suppressing degradation of the polyolefin thermoplastic elastomer, and examples of the unsaturated compound having a carboxyl group include acrylic acid, methacrylic acid, itaconic acid, crotonic acid, isocrotonic acid and maleic acid.

Examples of the commercially available products of the polyolefin thermoplastic elastomer include the TAFMER series of Mitsui Chemicals, Inc. (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480 and P-0680), the NUCREL series of Du Pont-Mitsui Polychemicals Co., Ltd. (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C and N035C), the ELVALOY AC series (for example, 1125AC, 1209AC, 1218AC, 1609AC, 1820AC, 1913AC, 2112AC, 2116AC, 2615AC, 2715AC, 3117AC, 3427AC and 3717AC), the ACRYFT series of Sumitomo Chemical Co., Ltd., the EVATATE series of Sumitomo Chemical Co., Ltd., the ULTRACENE series of Tosoh Corporation, the PRIME TPO series (for example, E-2900H, F-3900H, E-2900, F-3900, J-5900, E-2910, F-3910, J-5910, E-2710, F-3710, J-5910, E-2740, F-3740, R110MP, R110E, T310E and M142E).

(Thermoplastic resin B)

Thermoplastic resin B is not particularly limited, as long as it is formed of the same structural units as the hard segment of thermoplastic resin A and is a polybutylene terephthalate (PBT).

In the specification, "the same structural unit as the hard segment of thermoplastic resin A" refers to a structural unit in which a manner of bonding for forming a main chain is the same as that of the hard segment of thermoplastic resin A. For example, when the structural unit that corresponds to the hard segment of thermoplastic resin A is polyester, the thermoplastic resin B is polyester. The resin mixture may include a single kind of thermoplastic resin B, or may include two or more kinds thereof.

From the viewpoint of securing favorable bonding with respect to a tire frame, the structure of the hard segment of thermoplastic resin A and the structure of thermoplastic resin B are preferably similar to each other. For example, when the hard segment of thermoplastic resin A is polybutylene terephthalate, the structure of thermoplastic resin B is

preferably polybutylene terephthalate, polyethylene terephthalate, polybutylene naphthalate, polyethylene naphthalate and the like, and is more preferably polybutylene terephthalate.

In the specification, the case "thermoplastic resin B is formed of the structural units as the hard segment of thermoplastic resin A" includes a case in which thermoplastic resin B consists only of the same structural units as the hard segment of thermoplastic resin A, and a case in which thermoplastic resin B includes the same strucural units as the hard segment of thermoplastic resin A in an amount of 80% by mass or more, preferably 90% by mass or more, more preferably 95% by mass or more, of the total structural units. When thermoplastic resin A includes two or more kinds of structural units, thermoplastic resin B is a resin having the same structural unit as the structural unit that occupies the greatest proportion in thermoplastic resin A.

The thermoplastic resin that is used as thermoplastic resin B are thermoplastic resins formed of structural units that correspond to the hard segment of the thermoplastic elastomers as described above, and more specifically a polyester thermoplastic resin. Specific examples of the polyester thermoplastic resin, polyamide thermoplastic resin and polyolefin thermoplastic resin are described below.

-Polyester thermoplastic resin-

Examples of the polyester thermoplastic resin include a polyester that forms a hard segment of the polyester thermoplastic elastomer as described above.

Specific examples of the polyester thermoplastic resin include an aliphatic polyester such as polylactic acid, polyhydroxy-3-butyl butyrate, polyhydroxy-3-hexyl butylate, poly(ε-caprolactone), polyenanthonolactone, polycaprylolactone and polybutylene adipate; and an aromatic polyester such as polyethylene terephthalate, polybutylene terephthalate, polyethylene naphthalate and polybutylene naphthalate. Among these, from the viewpoint of heat resistance and processability, the polyester thermoplastic resin is preferably an aromatic polyester, more preferably polybutylene terephthalate.

As a commercial product of the polyester thermoplastic resin, for example, DURANEX series (such as 201AC, 2000 and 2002) from Polyplastics Co., Ltd., NOVADURAN series (such as 5010R5 and 5010R3-2) from Mitsubishi Engineering-Plastics Corporation, and TORAYCON series (such as 1401X06 and 1401X31) from Toray Industries, Inc. may be used.

(2) Polyamide thermoplastic resin

Examples of the polyamide thermoplastic resin include a polyamide that forms a hard segment of the polyamide thermoplastic elastomer as described above.

Specific examples of the polyamide thermoplastic resin include a polyamide obtained by ring-opening polycondensation of ε-caprolactam (amide 6), a polyamide obtained by ring-opening polycondensation of undecane lactam (amide 11), a polyamide obtained by ring-opening polycondensation of lauryl lactam (amide 12), a polyamide obtained by polycondensation of a diamine and a dibasic acid (amide 66), and a polyamide having m-xylylenediamine as a constituent unit (amide MX).

Amide 6 may be expressed by $\{CO-(CH_2)_5-NH\}_n$, for example. Amide 11 may be expressed by $\{CO-(CH_2)_{10}-NH\}_n$, for example. Amide 12 may be expressed by $\{CO-(CH_2)_{11}-NH\}_n$, for example. Amide 66 may be expressed by $CO(CH_2)_4CONH(CH_2)_6NH\}_n$, for example. Amide MX may be expressed by the following Formula (A-1). In the formulas, n represents the number of repeating units.

As a commercial product of amide 6, for example, UBE NYLON series (such as 1022B and 1011FB) from Ube Industries, Ltd. can be used. As a commercial product of amide 11, for example, RILSAN B series from ARKEMA can be used. As a commercial product of amide 12, for example, UBE NYLON series (such as 3024U, 3020U and 3014U) from Ube Industries, Ltd. can be used. As a commercial product of amide 66, for example, LEONA series (such as 1300S and 1700S) from Asahi Kasei Corporation can be used. As a commercial product of amide MX, for example, MX NYLON series (such as S6001, S6021 and S6011) from Mitsubishi Gas Chemical Company, Inc. can be used.

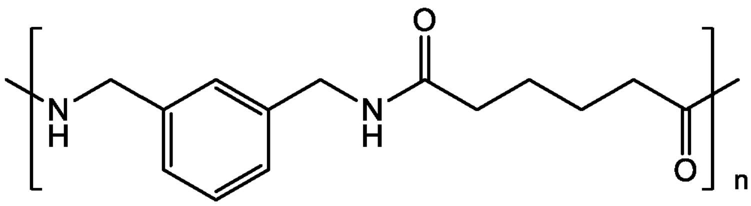

(A-1)

The polyamide thermoplastic resin may be a homopolymer that consists only of the aforementioned structural

unit, or a copolymer of the structural unit and other monomers. When the polyamide thermoplastic resin is a copolymer, the content of the structural unit as described above is preferably 40% by mass or more.

(3) Polyolefin thermoplastic resin

Examples of the polyolefin thermoplastic resin include a polyolefin that forms a hard segment of the polyolefin thermoplastic elastomer as described above.

Specific examples of the polyolefin thermoplastic resin include polyethylene thermoplastic resin, polypropylene thermoplastic resin and polybutadiene thermoplastic resin. Among these, from the viewpoint of heat resistance and processability, polypropylene thermoplastic resin is preferred.

Specific examples of the polypropylene thermoplastic resin include a propylene homopolymer, a propylene-$\alpha$-olefin random copolymer and a propylene-$\alpha$-olefin block copolymer. Examples of the $\alpha$-olefin include $\alpha$-olefins having approximately from 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradodecene, 1-hexadecene, 1-octadecene and 1-eicosene.

[Adhesive layer]

The metal resin composite member may include an adhesive layer between the metal cord and the resin layer. The material of the adhesive layer is not particularly restricted, and examples thereof include thermoplastic resins (including thermoplastic resin elastomers). The adhesive layer may include only a single thermoplastic resin, or may include two or more kinds thereof.

From the standpoint of adhesion with respect to the resin layer, the thermoplastic resin that forms the adhesive layer is preferably a thermoplastic resin that has a structural unit of the same kind as a hard segment of thermoplastic resin A included in the resin mixture that forms the resin layer. For example, when thermoplastic resin A is a polyester thermoplastic elastomer, the thermoplastic resin that forms the adhesive layer is preferably a polyester thermoplastic elastomer or a polyester thermoplastic resin.

From the standpoint of adhesion with respect to the metal cord, the thermoplastic resin that forms the adhesive layer is preferably modified with a functional group, more preferably modified with an acidic functional group.

<Tire>

The tire of the invention includes a tire frame having a circular shape, which is formed from a resin material, and the above-described metal resin composite member, which is disposed on an outer circumferential portion of the tire frame.

The type of the resin material that forms a tire frame is not particularly limited. For example, the resin material may be selected from the resins described as thermoplastic resin A and thermoplastic resin B above.

From the viewpoint of bondability of the resin layer of the metal resin composite material to the tire frame, the tire frame is preferably formed of a resin material that includes thermoplastic resin C, which is a thermoplastic resin having the same structural units as the hard segment of thermoplastic resin A.

In the specification, the "thermoplastic resin C having the same structural units as the hard segment of thermoplastic resin A" may be a thermoplastic resin that has only the same structural units as the hard segment of thermoplastic resin A, or a thermoplastic resin that has the same structural units as the hard segment of thermoplastic resin A and structural units that are different from the hard segment of thermoplastic resin A. The resin mixture may include a single kind of thermoplastic resin C, or may include two or more kinds thereof.

From the viewpoint of running properties and durability of a tire, thermoplastic resin C preferably has the same hard segment as the hard segment of thermoplastic resin A (i.e., thermoplastic elastomer). Therefore, for example, when thermoplastic resin A is a polyester thermoplastic elastomer, thermoplastic resin C is preferably a polyester thermoplastic elastomer.

From the viewpoint of bondabiltiy of the resin layer of the metal resin composite member with respect to the tire frame, thermoplastic resin A and thermoplastic resin C preferably has a similar structure. For example, when thermoplastic resin A has polybutylene terephthalate as a hard segment, thermoplastic resin C is preferably a thermoplastic elastomer having polybutylene terephthalate, polybutylene naphthalate and the like as a hard segment; more preferably a thermoplastic elastomer having polybutylene terephthalate as a hard segment.

When the resin material that forms a tire frame includes thermoplastic resin C, the proportion thereof in the total resin component is preferably 70% by mass or more, more preferably 80% by mass or more, further preferably 90% by mass or more.

From the viewpoint of running properties and durability of a tire, thermoplastic resin C preferably has the same

hard segment and the same soft segment as the hard segment and the soft segment of thermoplastic resin A, and the HS ratio of the resin material that forms a tire frame is preferably smaller than the HS ratio of the resin material that forms a resin layer of the metal resin composite member.

In the specification, the HS ratio of the resin material refers to a ratio of hard segment (HS) to the total of hard segment (HS) and soft segment (SS) in the resin mixture, and is calculated by the following formula. The "hard segment (HS) in the resin material" refers to the hard segment in thermoplastic resin C. The HS ratio of the resin material can be measured by the measurement of the HS ratio of the resin mixture as described above.

$$\text{HS ratio (\% by mass)} = \{HS/(HS+SS)\} \times 100$$

The melting point of the resin material is not particularly restricted, and is usually from 100°C to 350°C. From the standpoints of durability and productivity of the tire, the melting point of the resin material is preferably selected from 100°C to 250°C, more preferably selected from 120°C to 250°C.

From the standpoint of bondability between the metal resin composite member and the tire frame, a difference between the melting point of the resin mixture that forms the resin layer of the metal resin composite member and the melting point of the resin material that forms the tire frame is preferably 6°C or less, more preferably 3°C or less.

In the specification, the melting point of the resin mixture is measured by DSC. When the resin mixture has two or more melting points, the melting point of a component with the greatest mass proportion in the resin mixture is regarded as the melting point of the resin mixture. The same applies to the melting point of the resin material that forms a tire frame.

The type of thermoplastic resin C is not particularly limited, as long as it has the same structural units as the hard segment of thermoplastic resin A. Examples of thermoplastic resin C include thermoplastic elastomers such as polyester thermoplastic elastomer, polyamide thermoplastic elastomer and polyolefin thermoplastic elastomer; and thermoplastic resins having a structural unit that corresponds to the hard segment of these thermoplastic elastomers, such as polyester thermoplastic resin, polyamide thermoplastic resin and polyolefin thermoplastic resin.

Specific examples of the thermoplastic elastomer and the thermoplastic resin that may be used as thermoplastic resin C include the thermoplastic elastomers that may be used as thermoplastic resin A and the thermoplastic resins that may be used as thermoplastic resin B, as described above.

The resin material may include a component other than the resin. Examples of the component include various fillers (e.g., silica, calcium carbonate and clay), age resistors, oils, plasticizers, color formers, and weather resistant agents. When the resin material includes a component other than the resin, the total content ratio thereof is preferably not greater than 10% by mass, more preferably not greater than 5% by mass, with respect to the total mass of the resin material.

The tensile elastic modulus, which is defined in JIS K7113:1995, of the resin material is preferably from 50 MPa to 1,000 MPa, more preferably from 50 MPa to 800 MPa, still more preferably from 50 MPa to 700 MPa. When the tensile elastic modulus of the resin material is from 50 MPa to 1,000 MPa, attachment of a rim to the tire can be efficiently performed while maintaining the shape of the tire frame.

The tensile strength, which is defined in JIS K7113 (1995), of the resin material is usually approximately from 15 MPa to 70 MPa, preferably from 17 MPa to 60 MPa, more preferably from 20 MPa to 55 MPa.

The tensile strength at yield, which is defined in JIS K7113 (1995), of the resin material is preferably 5 MPa or more, more preferably from 5 MPa to 20 MPa, still more preferably from 5 MPa to 17 MPa. When the tensile strength at yield of the resin material is 5 MPa or more, the tire can endure the deformation upon application of a load during running or the like.

The tensile elongation at yield, which is defined in JIS K7113 (1995), of the resin material is preferably 10% or more, more preferably from 10% to 70%, still more preferably from 15% to 60%. When the tensile elongation at yield of the resin material is 10% or more, attachment to a rim can be performed favorably due to a large elastic region.

The tensile elongation at break, which is defined in JIS K7113 (1995), of the resin material is preferably 50% or more, more preferably 100% or more, still more preferably 150% or more, most preferably 200% or more. When the tensile elongation at break of the resin material is 50% or more, attachment to a rim can be performed favorably and the tire becomes less likely to break against collision.

The deflection temperature under load (0.45 MPa), which is defined in ISO75-2 or ASTM D648, of the resin material is preferably 50°C or more, more preferably from 50°C to 150°C, still more preferably from 50°C to 130°C. When the deflection temperature under load of the resin material is 50°C or more, deformation of the tire frame can be suppressed even in a case of performing vulcanization during the production of the tire.

When the metal resin composite member includes an adhesive layer between the metal cord and the resin layer, it is preferred that the Martens hardness (d 1) of the tire frame, the Martens hardness (d2) of the resin layer, and the Martens hardness (d3) of the adhesive layer satisfy a relationship of $d1 \leq d2 < d3$. When the Martens hardness of

the resin layer is less than the Martens hardness of the adhesive layer, and is equal to or greater than the Martens hardness of the tire frame, the difference in rigidity between the resin material that forms the tire frame and the metal member is effectively reduced. As a result, durability of the tire can be further improved.

In the following, an embodiment of the tire according to the invention will be described by referring to the drawings.

FIG. 1A is a perspective view illustrating a cross-section of a part of a tire 10 according to the present embodiment. FIG. 1B is a cross-sectional view of a bead portion of the tire 10 according to the present embodiment being attached to a rim. As illustrated in FIG. 1A, the tire 10 has a cross-sectional shape that is substantially the same as that of a conventional and common rubber-made pneumatic tire. As illustrated in FIG. 1A, the tire 10 has a tire case 17 that includes a pair of bead portions 12, which are each in contact with a bead sheet 21 and a rim flange 22 of a rim 20 illustrated in FIG. 1B; side portions 14, which extend from the bead portions 12 toward the outer side along a radial direction of the tire; and a crown portion 16 (outer circumferential portion), which connects the outer ends in the radial direction of the side portions 14.

The tire case 17 corresponds to the above-described tire frame, and is formed from the above-described resin material. Although the tire case 17 is entirely formed from the above-described resin material in the embodiment, the invention is not restricted to this configuration and different resin materials may be used for respective parts (e.g., side portions 14, crown portion 16 and bead portions 12) as with a case of a conventional rubber-made pneumatic tire. Further, a reinforcing material (e.g., a fiber, a cord, a nonwoven fabric, or a woven fabric, which is made of a polymer material or a metal) may be embedded in order to reinforce each part of the tire case 17.

The tire case 17 is formed by preparing two tire case half sections (i.e., tire frame pieces) each having a shape of the tire case 17 being divided at the center of the tread width in the circumferential direction, and bonding them together at the tire equatorial plane. The tire case 17 is not restricted to that formed from two members, and may be formed from three or more members.

The tire case half sections can be prepared by, for example, vacuum molding, pressure molding, injection molding, or melt casting. Accordingly, as compared to a conventional case where a tire case is molded from a rubber, the production process can be greatly simplified and the time for molding can be saved because it is not necessary to perform vulcanization.

In the present embodiment, as in a conventional pneumatic tire, an annular bead core 18 is embedded in the bead portion 12 illustrated in FIG. 1B. Although a steel cord is used as the bead core 18 in the embodiment, an organic fiber cord, an organic fiber cord having a resin layer, a hard resin cord or the like may be used as well. The bead core 18 may be omitted when sufficient rigidity of the bead portion 12 is ensured and there is no problem in fitting of the bead portion 12 with the rim 20.

In the present embodiment, an annular sealing layer 24, which is composed of a material having superior sealing performance than the resin material that forms the tire case 17, is formed at a portion of each bead portion 12 that comes into contact with the rim 20, or at least at a portion of each bead portion 12 that comes into contact with the rim flange 22 of the rim 20. The sealing layer 24 may be formed also at portions where the tire case 17 (bead portion 12) is in contact with the bead sheet 21. The sealing layer 24 may be omitted when the resin material that forms the tire case 17 can ensure sufficient sealing with the rim 20. Examples of the material having superior sealing performance than the resin material that forms the tire case 17 include a material that is softer than the resin material that forms the tire case 17, such as rubber, and thermoplastic resins and thermoplastic elastomers that are softer than the resin material.

As illustrated in FIG. 1A, a reinforcing cord 26 corresponding to the metal resin composite member is wound around the crown portion 16 of the tire case 17 along a circumferential direction. When viewed at a cross-section along the axial direction of the tire case 17, the reinforcing cord 26 is disposed in a spiral manner while at least a part thereof is embedded in the crown portion 16, and forms a reinforcing cord layer 28. At an outer side of the reinforcing cord layer 28, along a radial direction of the tire, a tread 30 composed of a material having superior wear resistance than the resin material constituting the tire case 17, such as a rubber, is disposed.

In the present embodiment, as illustrated in FIG. 2, the reinforcing cord 26 is in a state where a metal member 26A such as a steel cord is covered with a coating resin (resin mixture) 27 (i.e., a coated cord member). The reinforcing cord 26 and the crown portion 16 are bonded by a method such as welding or using an adhesive.

In the present embodiment, as illustrated in FIG. 2, the reinforcing cord 26 has a substantially trapezoidal cross-sectional shape. In the following descriptions, the upper surface of the reinforcing cord 26 (the surface at the outer side in a radial direction of the tire) is indicated by 26U, and the lower surface of the reinforcing cord 26 (the surface at the inner side in a radial direction of the tire) is indicated by 26D. Although the reinforcing cord 26 has a substantially trapezoidal cross-sectional shape in the embodiment, the invention is not restricted to this constitution. The reinforcing cord 26 may be in any shape, except a shape in which the width of a cross-sectional shape increases from the side of the lower surface 26D (inner side in the radial direction of the tire) toward the upper surface 26U (outer side in the radial direction of the tire).

As illustrated in FIG. 2, gaps 28A are formed between adjacent reinforcing cords 26 along a circumferential direction. Accordingly, the outer circumferential surface of the reinforcing cord layer 28 has an irregular shape, and an

outer circumferential surface 17S of the tire case 17, which is formed by the reinforcing cord layer 28, also has an irregular shape.

The outer circumferential surface 17S (including the irregularities) of the tire case 17 has finely roughened irregularities 96, and a cushion rubber 29 is bonded thereon with a bonding agent. The cushion rubber 29 fills the roughened irregularities 96 at a surface in contact with the reinforcing cord 26.

On the cushion rubber 29 (the outer circumferential surface side), the above-described tread 30 is bonded. On the surface of the tread 30 that is in contact with the road surface, a tread pattern (not illustrated) constituted by plural grooves is formed in the same manner as in a conventional rubber-made pneumatic tire.

A method of producing the tire of the present embodiment is not particularly restricted. The tire of the present invention may be produced by sequentially performing, for example, the tire case molding step, reinforcing cord member winding step, roughening treatment step, layering step, and vulcanization step, which are described below, in this order.

(Tire Case Molding Step)

First, tire case half sections, supported by a thin metal support ring, are positioned to face each other. Subsequently, a bonding mold is set such that it comes into contact with the outer circumferential surfaces of the tire case half sections at which the same are facing each other. The bonding mold is configured to press the regions around the bonding portions (abutting portions) of the tire case half sections with a prescribed pressure. Then, the regions around the bonding portions of the tire case half sections are pressed at a temperature of not lower than the melting points of the resin layer of the reinforcing cord and the resin material constituting the tire case, whereby the bonding portions are melted and the tire case half sections are integrated to form the tire case 17.

In the present embodiment, although the bonding portions of the tire case half sections are heated using a bonding mold, the invention is not restricted thereto. For example, the tire case half sections may be bonded together by heating the bonding portions using a high-frequency heater or the like, or softening or melting the bonding portions in advance by hot air, irradiation with infrared radiation or the like, and subsequently applying a pressure to the bonding portions using a bonding mold.

(Reinforcing Cord Member Winding Step)

In the following, the step of winding the reinforcing cord 26 around the tire case 17 will be described by referring to FIG. 3. FIG. 3 is a drawing for explaining operations of embedding the reinforcing cord 26 in the crown portion of the tire case 17 using a cord heating device and rollers.

In FIG. 3, a cord feeding apparatus 56 includes a reel 58, around which the reinforcing cord 26 is wound; a cord heating device 59, which is disposed downstream of the reel 58 in the cord transfer direction; a first roller 60, which is disposed downstream in the transfer direction of the reinforcing cord 26; a first cylinder device 62, which moves the first roller 60 in a direction toward or away from the outer circumferential surface of the tire; a second roller 64, which is disposed downstream of the first roller 60 in the transfer direction of the reinforcing cord 26; and a second cylinder device 66, which moves the second roller 64 in a direction toward or away from the outer circumferential surface of the tire. The second roller 64 may be made of metal and used as a cooling roller.

In the present embodiment, the surface of the first roller 60 or the surface of the second roller 64 may be subjected to a treatment for inhibiting adhesion of the melted or softened coating resin material 27 (such as a fluorine resin coating). Alternatively, the rollers may be formed from a material to which the coating resin material 27 is less likely to attach. In the present embodiment, although the cord feeding apparatus 56 has two rollers, i.e., the first roller 60 and the second roller 64, the cord feeding apparatus 56 may have only one of these rollers.

The cord heating device 59 includes a heater 70 and a fan 72, which generate a hot air flow. The cord heating device 59 further includes a heating box 74, having an inner space for the reinforcing cord 26 to pass, to which the hot air flow is supplied; and a discharge outlet 76 from which the heated reinforcing cord 26 is discharged.

In this step, first, the temperature of the heater 70 of the cord heating device 59 is increased, and the ambient air that has been heated by the heater 70 is introduced into the heating box 74 with an air flow generated by rotation of the fan 72. Then, the reinforcing cord 26 that has been reeled out from the reel 58 is transferred to the heating box 74 with an inner space that has been heated with the hot air flow, whereby the reinforcing cord 26 is heated. The heating temperature is adjusted such that the coating resin 27 of the reinforcing cord 26 becomes molten or softened.

The heated reinforcing cord 26 passes through the discharge outlet 76, and is spirally wound around the outer circumferential surface of the crown portion 16 of the tire case 17 rotating in the direction of an arrow R as illustrated in FIG. 3, while applying a constant tension. In this process, the lower surface 26D of the reinforcing cord 26 is brought into contact with the outer circumferential surface of the crown portion 16. The coating resin 27, which is melted or softened by heating, spreads over the outer circumferential surface of the crown portion 16, whereby the reinforcing cord 26 is welded to the outer circumferential surface of the crown portion 16. As a result, the bonding strength between

the crown portion 16 and the reinforcing cord 26 is improved.

In the present embodiment, although the reinforcing cord 26 is bonded to the outer circumferential surface of the crown portion 16 in the above-described manner, the bonding may be performed by other methods as well. For example, the bonding may be performed such that the reinforcing cord 26 is partially or entirely embedded in the crown portion 16.

(Roughening Treatment Step)

Subsequently, using a blasting apparatus that is not illustrated in the drawing, a blasting abrasive is ejected at high speed toward the outer circumferential surface 17S of the tire case 17 while rotating the same. The ejected blasting abrasive collides with the outer circumferential surface 17S to form finely roughened irregularities 96, which have an arithmetic average roughness (Ra) of not less than 0.05 mm, at the outer circumferential surface 17S. By the formation of the finely roughened irregularities 96 on the outer circumferential surface 17S of the tire case 17, the outer circumferential surface 17S is hydrophilized, and wettability with respect to a bonding agent as described below is improved.

(Layering Step)

Next, a bonding agent for bonding the cushion rubber 29 is applied onto the roughened outer circumferential surface 17S of the tire case 17. The bonding agent is not particularly restricted and, for example, a triazine thiol adhesive, a chlorinated rubber adhesive, a phenolic resin adhesive, an isocyanate adhesive, a halogenated rubber adhesive, or a rubber adhesive can be used. The bonding agent is preferably capable of reacting at a temperature at which the cushion rubber 29 can be vulcanized (from 90°C to 140°C).

Then, the cushion rubber 29, which is in an unvulcanized state, is disposed around the outer circumferential surface 17S to which the bonding agent has been applied, and a bonding agent such as a rubber cement composition is applied onto the cushion rubber 29. Subsequently, a tread rubber 30A, which is in a vulcanized or semi-vulcanized state, is disposed on the cushion rubber 29 to which the bonding agent has thus been applied, whereby a green tire case is obtained.

(Vulcanization Step)

Next, the green tire case is vulcanized in a vulcanization can or a mold. In this process, the unvulcanized cushion rubber 29 flows to fill the roughened irregularities 96 that have been formed on the outer circumferential surface 17S of the tire case 17 by the roughening treatment. Once the vulcanization is completed, an anchoring effect is exerted by the cushion rubber 29 filling the roughened irregularities 96, and the bonding strength between the tire case 17 and the cushion rubber 29 is improved. In other words, the bonding strength between the tire case 17 and the tread 30 is improved by means of the cushion rubber 29.

Thereafter, the above-described sealing layer 24 is attached to the bead portion 12 of the tire case 17 using an adhesive or the like, whereby the tire 10 is completed.

The above-described embodiments may be implemented with various modifications without departing from the scope of the claims. It is noted that the scope of the invention is only limited by the appended claims but not limited to these embodiments. For the details of embodiments that are applicable to the invention, reference can be made to, for example, JP-ANo. 2012-46031.

EXAMPLES

In the following, the invention will be described more concretely by way of the Examples, but the invention is not restricted thereto.

Tires of the Examples and the Comparative Examples were prepared by the method as described below, and the evaluation was conducted. The results are shown in Table 1.

(1) Production of Tire

On the outer circumference of a multifilament having an average diameter of 1.15 mm (a cord obtained by twisting five monofilaments of 0.35 mm in average diameter (made of steel, strength: 280 N, elongation: 3%)), an adhesive layer is formed using an acid-modified polyester thermoplastic elastomer (PRIMALLOY AP CQ730, Mitsubishi Chemical Corporation). Then, a resin layer of 400 μm in minimum thickness is formed on the adhesive layer by extruding a resin mixture using an extruder, and cooling the same, thereby obtaining a metal resin composite member. In Example 10, the minimum thickness of the resin layer is changed to 100 μm.

Tires of the Examples and the Comparative Examples (tire size: 225/40R18), having a tire frame as illustrated in the embodiments described above and the metal resin composite member prepared in the above process, which is disposed on an outer circumferential portion of the tire frame, are produced by a known method.

The resin layer is formed using the resins shown in Tables 1 and 2 at the respective blending ratios (parts by mass). The details of the abbreviation in Tables 1 and 2 are as follows.

TPC1: polyester thermoplastic elastomer in which a hard segment is PBT and a soft segment is PTMG (HYTREL 5557, DuPont-Toray Co., Ltd., HS ratio: 60.4% by mass)
TPC2: polyester thermoplastic elastomer in which a hard segment is PBT and a soft segment is PTMG (HYTREL 4767N, DuPont-Toray Co., Ltd., HS ratio: 47.6% by mass)
TPC3: polyester thermoplastic elastomer in which a hard segment is PBT and a soft segment is PTMG (HYTREL 6347, DuPont-Toray Co., Ltd., HS ratio: 75% by mass)
TPC4: polyester thermoplastic elastomer (PELPRENE P150B, Toyobo Co., Ltd.)
PBT1: PBT resin (TORAYCON 1401X06, Toray Industries, Inc.)
PBT2: PBT resin (DURANEX 201AC, Polyplastics Co., Ltd.)
PBT3: PBT resin (NOVADURAN 5010R3-2, Mitsubishi Engineering-Plastics Corporation)
SBR: epoxidized thermoplastic elastomer (EPOFRIEND AT501, Daicel Corporation)
SEBS: hydrogenated styrene thermoplastic elastomer (TUFTEC M1913, Asahi Kasei Corporation)

(2) HS ratio, existence or non-existence of sea-island structure and number of Tan δ peaks

The HS ratio of the resin (or resin mixture) used for the formation of the resin layer is measured by NMR under the conditions as mentioned above. Father, the existence or non-existence of a sea-island structure and the domain size are determined by observing a phase image of a section of the resin with an AFM (SPM5500, Agilent Technologies Japan, Ltd.) at AC mode. In Tables 1 and 2, YES refers to that a sea-island structure is observed and NO refers to that a sea-island structure is not observed. Further, the number of Tan δ peaks is determined by the method as mentioned above.

(3) Low-temperature impact resistance

The low-temperature impact resistance is evaluated based on the result of Charpy impact test (JIS K 7111-1:2012). Specifically, the test is conducted with a digital impact tester (DG-UB type, Toyo Seiki Seisaku-sho, Ltd.) at -20°C and -30°C, respectively, using a 2J impact hammer. The results are evaluated by the following criteria.

A: The sample does not break at -30°C
B: The sample does not break at -20°C but breaks at -30°C
C: The sample breaks at -20°C

(4) Cornering Power

The tire with an air pressure set at 230 kPa (relative pressure) is placed on a flat belt tester and allowed to rotate at a rate corresponding to a running speed of 80 km/h to measure the lateral force upon application of a slip angle. Specifically, the lateral force at a slip angle of 0° and the lateral force at a slip angle of 1° are measured, and the difference between the measured values is indicated as an index with respect to the difference measured in the tire of Comparative Example 1, being 100. The greater the index is, the better the cornering power is. Based on the index, the results are evaluated based on the following A to C, in which A and B are regarded as acceptable.

A: The index is 105 or greater.
B: The index is from 103 to 104.
C: The index is 102 or less.

(5) Moisture heat resistance (rust resistance)

The metal resin composite member is left to stand for 3 weeks under the conditions of 80°C and 90 RH%, and a peeling force (N) when the resin layer is peeled off is measured by conducting 180° peeling test with a tensile tester (TENSIRON RTF-1210, A&D Company, Limited), at room temperature (25°C) and at a tensile rate of 100 mm/min. The results are evaluated by the following criteria.

A: The peeling force when the resin layer is peeled off is 14N or more
B: The peeling force when the resin layer is peeled off is less than 14N

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Resin for resin layer | TPC1 | 90 | 80 | 70 | 70 | 70 | 70 | 70 | - | - | - |
| | TPC2 | - | - | - | - | - | - | - | 70 | 60 | 60 |
| | TPC3 | - | - | - | - | - | - | - | - | - | - |
| | TPC4 | - | - | - | - | - | - | - | - | - | - |
| | PBT1 | 10 | 20 | 30 | - | - | 20 | 20 | 30 | 40 | 40 |
| | PBT2 | - | - | - | 30 | - | - | - | - | - | - |
| | PBT3 | - | - | - | - | 30 | - | - | - | - | - |
| | SBR | - | - | - | - | - | 10 | - | - | - | - |
| | SEBS | - | - | - | - | - | - | 10 | - | - | - |
| Evaluation results | HS ratio (mass%) | 64.4 | 68.3 | 72.3 | 72.3 | 72.3 | 62.3 | 62.3 | 63.3 | 68.6 | 68.6 |
| | Cornering power | B | A | A | A | A | A | A | A | A | B |
| | | 104 | 107 | 113 | 113 | 113 | 105 | 105 | 105 | 108 | 104 |
| | Heat-moist resistance | A | A | A | A | A | A | A | A | A | A |
| | Low-temperature impact resistance | A | A | B | B | B | A | A | A | B | A |
| | Number of tan $\delta$ peaks | 2 | 2 | 2 | 2 | 2 | 2 | 2 | 2 | 2 | 2 |
| | Sea-island structure | YES | YES | YES | YES | YES | YES | YES | YES | YES | YES |
| | Domain size ($\mu$m) | 0.25 | 0.3 | 0.6 | 0.7 | 0.65 | 0.5 | 0.5 | 1.3 | 3.5 | 3.5 |

Table 2

| | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 | Comp. Example 10 | Comp. Example 11 |
|---|---|---|---|---|---|---|---|---|---|---|---|---|
| Resin for resin layer | TPC1 | 100 | 60 | - | - | 75 | 70 | 60 | 40 | 25 | - | - |
| | TPC2 | - | - | - | - | - | - | - | - | - | 100 | 80 |
| | TPC3 | - | - | 100 | - | 25 | 20 | 40 | 60 | 75 | - | - |
| | TPC4 | - | - | - | 100 | - | - | - | - | - | - | - |
| | PBT1 | - | 40 | - | - | - | - | - | - | - | - | 20 |
| | PBT2 | - | - | - | - | - | - | - | - | - | - | - |
| | PBT3 | - | - | - | - | - | - | - | - | - | - | - |
| | SBR | - | - | - | - | - | 10 | - | - | - | - | - |
| | SEBS | - | - | - | - | - | - | - | - | - | - | - |
| Evaluation results | HS ratio (mass%) | 60.4 | 76.24 | 75 | 71.4 | 64.1 | 57.3 | 66.2 | 69.2 | 71.4 | 47.6 | 58.1 |
| | Cornering power | C | A | A | C | C | C | C | B | B | C | C |
| | | 100 | 120 | 105 | 103 | 102 | 102 | 103 | 104 | 104 | 90 | 103 |
| | Heat-moist resistance | B | A | A | A | B | B | A | A | A | B | B |
| | Low-temperature impact resistance | A | C | C | C | A | A | B | C | C | A | A |
| | Number of tan $\delta$ peaks | 1 | 2 | 1 | 1 | 1 | 1 | 1 | 1 | 1 | 1 | 2 |
| | Sea-island structure | NO | YES | NO | NO | NO | YES | NO | NO | NO | NO | YES |
| | Domain size ($\mu$m) | - | 2.5 | - | - | - | 5.1 | - | - | - | - | - |

In Tables 1 and 2, the data of Examples 4 to 7 and Comparative Example 6, and the data of the cornering power of all of the Examples and the Comparative Examples are hypothetical, and the other data are obtained by conducting a test.

As shown in Tables 1 and 2, the Examples, in which the resin mixture used for the formation of the resin layer includes polyester thermoplastic elastomer (TPC) and polyester thermoplastic resin (PBT) and the HS ratio is within a range of from 60% by mass to less than 75% by mass, exhibits favorable low-temperature impact resistance and favorable cornering power.

When a section of the resin composition used in the Example is observed with an AFN, a sea-island structure consisting of domains including PBT and a matrix including TPC is formed. Further, the Tan δ curve obtained by viscoelasticity measurement has two peaks and the peak at the lower temperature side (derived from TPC) exists in a range of -20°C or less.

Comparative Examples 1 and 3-10, in which the resin layer does not include PBT, exhibit inferior results in at least one of cornering power and low-temperature impact resistance.

When a section of the resin composition used in the Comparative Example 1 and 3-10 is observed with an AFN, a sea-island structure is not formed. Further, the Tan δ curve obtained by viscoelasticity measurement has only one peak.

Comparative Example 2, in which the resin layer includes TPC and PBT but the HS ratio is greater than 75% by mass, exhibits favorable cornering power but inferior low-temperature impact resistance.

Comparative Example 11, in which the resin layer includes TPC and PBT but the HS ratio is less than 60% by mass, exhibits favorable low-temperature impact resistance but inferior cornering power.

## Claims

1. A metal resin composite member for a tire, comprising a metal cord and a resin layer,

    the resin layer being formed of a resin mixture that includes a thermoplastic resin A, which has a hard segment and a soft segment, and a thermoplastic resin B, which is formed of the same structural units as the hard segment of thermoplastic resin A, and
    a ratio of the hard segment in the resin mixture being from 60% by mass to less than 75% by mass,
    wherein the same structural units refers to a case in which thermoplastic resin B consists only of the same structural units as the hard segment of thermoplastic resin A, or a case in which thermoplastic resin B includes the same structural units as the hard segment of thermoplastic resin A in an amount of 80% by mass or more, of the total structural units,
    **characterized in that** the thermoplastic resin A is a polyester thermoplastic elastomer (TPC) and the thermoplastic resin B is a polybutylene terephthalate (PBT).

2. The metal resin composite member for a tire according to claim 1, wherein the resin mixture comprises a sea-island structure.

3. The metal resin composite member for a tire according to claim 2, wherein the sea-island structure is formed of a matrix including the thermoplastic resin A and a domain including the thermoplastic resin B,
    wherein the domain refers to a region that corresponds to the island.

4. The metal resin composite member for a tire according to claim 2 or claim 3, wherein the sea-island structure has a domain size of from 0.1 μm to 10 μm.

5. The metal resin composite member for a tire according to any one of claim 1 to claim 4, wherein a Tan δ curve obtained by viscoelasticity measurement of the resin mixture has two or more peaks,
    wherein the Tan δ curve is obtained by conducting viscoelasticity measurement using a sample of 6 mm in width, 38 mm in length and 2 mm in thickness, with a viscoelastometer at torsion mode (from -100°C to 150°C, at a torsion of 0.28% and 35Hz) with a measurement gap of 20 mm.

6. The metal resin composite member for a tire according to claim 5, wherein, in the Tan δ curve, a peak derived from the thermoplastic resin A exists at a lower temperature side and a peak derived from the thermoplastic resin B exists at a higher temperature side, and the peak derived from the thermoplastic resin A exists at a temperature range of -10°C or lower.

7. A tire comprising a tire frame that has a circular shape and is formed of a resin material, and the metal resin composite member for a tire according to any one of claim 1 to claim 6 that is disposed at an outer periphery of the tire frame.

8. The tire according to claim 7, wherein the metal resin composite member is wound around the outer periphery of the tire frame.

## Patentansprüche

1. Metall-Harz-Verbundstoffelement für einen Reifen, das einen Metallkord und eine Harzschicht umfasst:

   wobei die Harzschicht aus einem Harzgemisch gebildet ist, das ein thermoplastisches Harz A, das ein hartes Segment und ein weiches Segment aufweist, und ein thermoplastisches Harz B, das aus den gleichen strukturellen Einheiten wie das harte Segment des thermoplastischen Harzes A gebildet ist, einschließt, und
   wobei ein Verhältnis des harten Segments in dem Harzgemisch von 60 Masse-% bis weniger als 75 Masse-% beträgt,
   wobei sich die gleichen strukturellen Einheiten auf einen Fall, in dem das thermoplastische Harz B nur aus den gleichen strukturellen Einheiten wie das harte Segment des thermoplastischen Harzes A besteht, oder einen Fall, in dem das thermoplastische Harz B die gleichen strukturellen Einheiten wie das harte Segment des thermoplastischen Harzes A in einer Menge von 80 Masse-% oder mehr der gesamten strukturellen Einheiten einschließt, beziehen.
   **dadurch gekennzeichnet, dass** das thermoplastische Harz A ein thermoplastisches Polyester-Elastomer (TPC) ist und das thermoplastische Harz B ein Polybutylenterephthalat (PBT) ist.

2. Metall-Harz-Verbundstoffelement für einen Reifen nach Anspruch 1, wobei das Harzgemisch eine Meer-Insel-Struktur umfasst.

3. Metall-Harz-Verbundstoffelement für einen Reifen nach Anspruch 2, wobei die Meer-Insel-Struktur aus einer Matrix, die das thermoplastische Harz A einschließt, und einer Domäne, die das thermoplastische Harz B einschließt, gebildet ist,
   wobei sich die Domäne auf einen Bereich bezieht, welcher der Insel entspricht.

4. Metall-Harz-Verbundstoffelement für einen Reifen nach Anspruch 2 oder Anspruch 3, wobei die Meer-Insel-Struktur eine Domänengröße von 0,1 μm bis 10 μm aufweist.

5. Metall-Harz-Verbundstoffelement für einen Reifen nach einem von Anspruch 1 bis Anspruch 4, wobei eine Tan-δ-Kurve, erhalten durch Viskoelastizitätsmessung des Harzgemischs, zwei oder mehr Spitzen aufweist,
   wobei die Tan-δ-Kurve durch Durchführen einer Viskoelastizitätsmessung unter Verwendung einer Probe mit einer Breite von 6 mm, einer Länge von 38 mm und einer Dicke von 2 mm, mit einem Viskoelastometer im Torsionsmodus (von -100 °C bis 150 °C, bei einer Torsion von 0,28 % und 35 Hz) mit einem Mess-Spalt von 20 mm, erhalten wird.

6. Metall-Harz-Verbundstoffelement für einen Reifen nach Anspruch 5, wobei, in der Tan-δ-Kurve, eine von dem thermoplastischen Harz A abgeleitete Spitze auf einer Seite niedrigerer Temperatur vorhanden ist und eine von dem thermoplastischen Harz B abgeleitete Spitze auf einer Seite höherer Temperatur vorhanden ist und die von dem thermoplastischen Harz A abgeleitete Spitze bei einem Temperaturbereich von -10 °C oder niedriger vorhanden ist.

7. Reifen, der ein Reifengerüst umfasst, das eine kreisförmige Gestalt aufweist und aus einem Harzmaterial gebildet ist, und das Metall-Harz-Verbundstoffelement für einen Reifen nach einem der Ansprüche 1 bis 6, das an einem äußeren Umfang des Reifengerüsts angeordnet ist.

8. Reifen nach Anspruch 7, wobei das Metall-Harz-Verbundstoffelement um den äußeren Umfang des Reifengerüsts gewickelt ist.

## Revendications

1. Elément composite métal-résine pour un bandage pneumatique, comprenant un câblé métallique et une couche

de résine ;

la couche de résine étant composée d'un mélange de résine incluant une résine thermoplastique A, comportant un segment dur et un segment mou, et d'une résine thermoplastique B, formée à partir des même unités structurales que le segment dur de la résine thermoplastique A ; et
un rapport du segment dur dans le mélange de résines représentant entre 60 % en masse à moins de 75 % en masse ;
dans lequel les mêmes unités structurales se réfèrent à un cas dans lequel la résine thermoplastique B est constituée uniquement des mêmes unités structurales que le segment dur de la résine thermoplastique A, ou à un cas dans lequel la résine thermoplastique B inclut les mêmes unités structurales que le segment dur de la résine thermoplastique A, dans une quantité représentant 80 % en masse ou plus par rapport à l'ensemble des unités structurales ;
**caractérisé en ce que** la résine thermoplastique A est un élastomère thermoplastique de polymère (TPC) et la résine thermoplastique B est un téréphtalate de polybutylène (PBT).

**2.** Elément composite résine-métal pour un bandage pneumatique selon la revendication 1, dans lequel le mélange de résines comprend une structure mer-île.

**3.** Elément composite résine-métal pour un bandage pneumatique selon la revendication 2, dans lequel la structure mer-île est composée d'une matrice incluant la résine thermoplastique A et d'un domaine incluant la résine thermoplastique B ;
dans lequel le domaine se réfère à une région correspondant à l'île.

**4.** Elément composite résine-métal pour un bandage pneumatique selon la revendication 2 ou la revendication 3, dans lequel la structure mer-île a une taille de domaine allant de 0,1 $\mu$m à 10 $\mu$m.

**5.** Elément composite résine-métal pour un bandage pneumatique selon l'une quelconque des revendications 1 à 4, dans lequel une courbe Tan $\delta$ obtenue par une mesure de la viscoélasticité du mélange de résines comporte deux pics ou plus ;
dans lequel la courbe Tan $\delta$ est obtenue en effectuant une mesure de la viscoélasticité en utilisant un échantillon d'une largeur de 6 mm, d'une longueur de 38 mm et d'une épaisseur de 2 mm, avec un viscoélastomètre en mode torsion (de -100 °C à 150 °C, à une torsion de 0,28 % et à 35 Hz), avec un écart de mesure de 20 mm.

**6.** Elément composite résine-métal pour un bandage pneumatique selon la revendication 5, dans lequel, dans la courbe Tan $\delta$, un pic dérivé de la résine thermoplastique A existe au niveau d'un côté à température inférieure et un pic dérivé de la résine thermoplastique B existe au niveau d'un côté à température plus élevée, et le pic dérivé de la résine thermoplastique A existe dans le cadre d'une plage de températures de -10 °C ou moins.

**7.** Bandage pneumatique comprenant un cadre de bandage pneumatique qui a une forme circulaire et est composé d'un matériau de résine, et de l'élément composite métal-résine pour un bandage pneumatique selon l'une quelconque des revendications 1 à 6 qui est disposé au niveau d'une périphérie externe du cadre d bandage pneumatique.

**8.** Bandage pneumatique selon la revendication 7, dans lequel l'élément composite métal-résine est enroulé autour de la périphérie externe du cadre du bandage pneumatique.

[FIG. 1A]

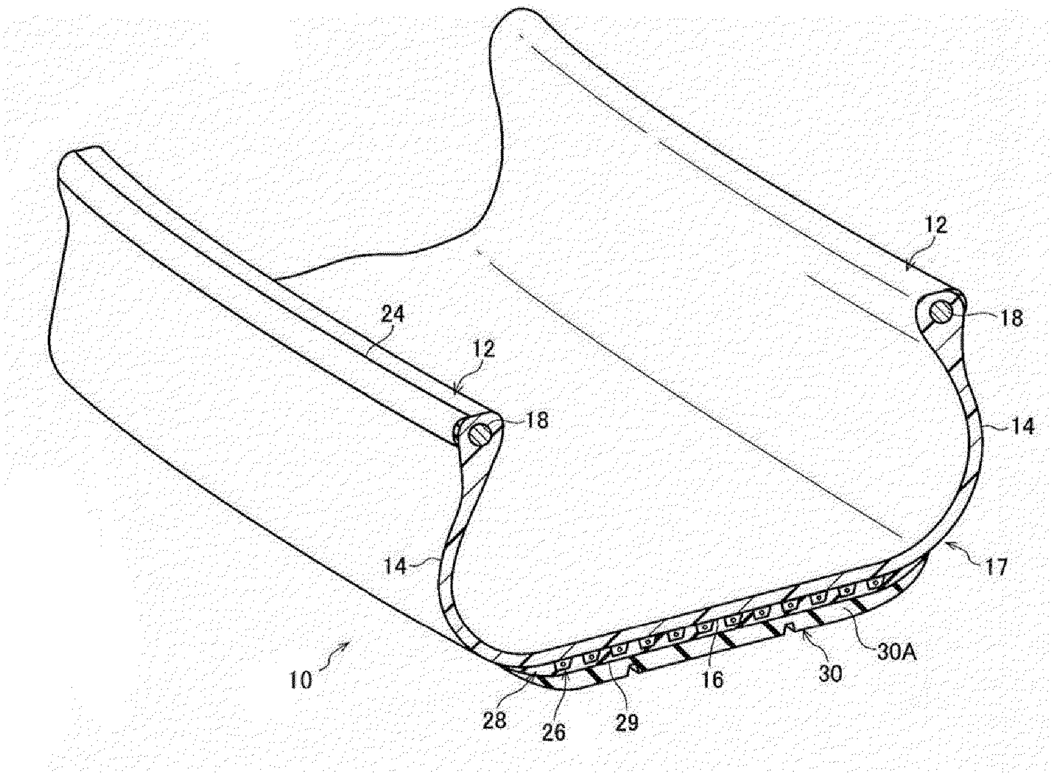


[FIG. 1B]

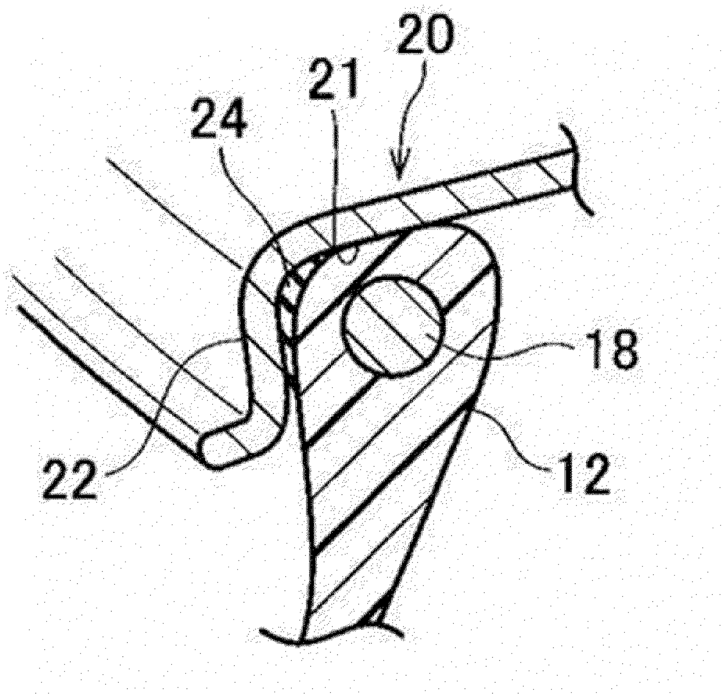

[FIG. 2]

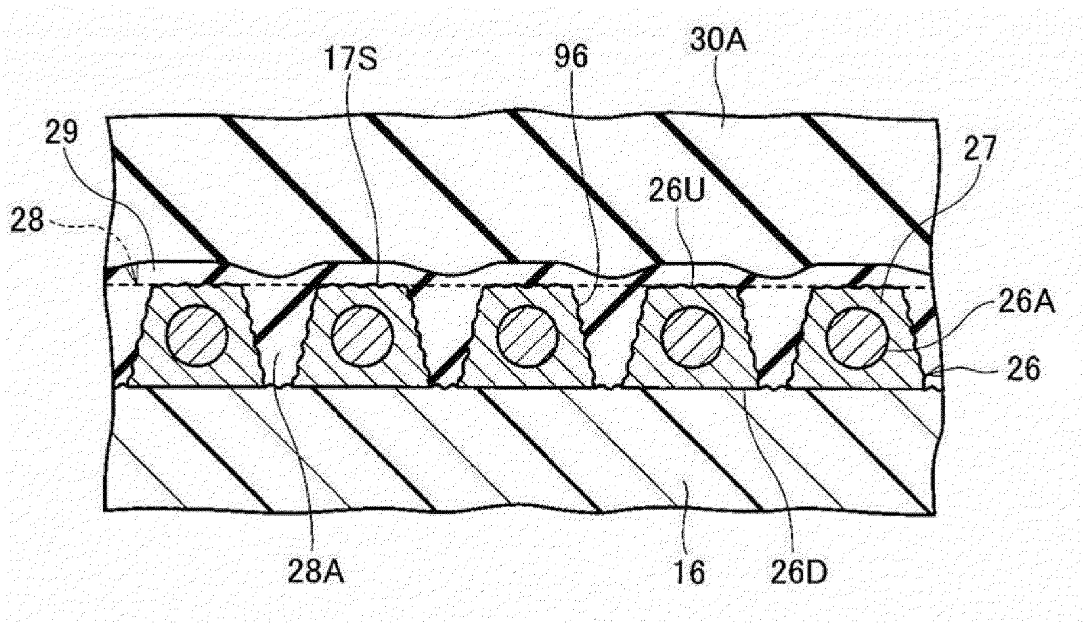
17S
96
30A
29
27
26U
28
26A
26
28A
16
26D

[FIG. 3]

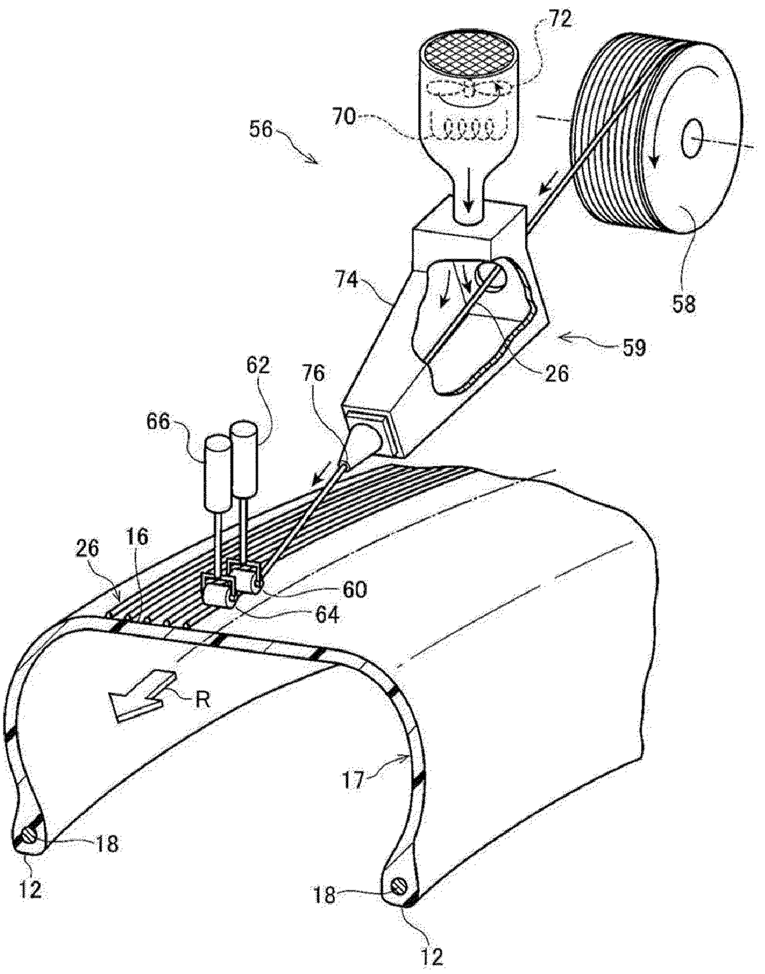
72
56
70
58
74
59
26
62
76
66
26
16
60
64
R
17
18
12
18
12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046030 A
- JP 2012046025 A
- EP 2676809 A1
- JP 2012046034 A
- JP 2004346273 A
- JP 2012046031 A